# EUROPÄISCHE PATENTSCHRIFT

(11) **EP 2 599 739 B1**
(45) Veröffentlichungstag und Bekanntmachung des Hinweises auf die Patenterteilung: **05.10.2016**
(21) Anmeldenummer: 12007800.1
(22) Anmeldetag: 19.11.2012
(51) Int. Cl.: B65G 47/90

(54) **Greifervorrichtung**
Gripper device
Dispositif de prise

(30) Priorität: 29.11.2011 DE 102011119659
(43) Veröffentlichungstag der Anmeldung: 05.06.2013
(73) Patentinhaber: MULTIVAC Sepp Haggenmüller SE & Co. KG, 87787 Wolfertschwenden (DE)
(72) Erfinder: Waizenegger, Kurt, 88319 Aitrach (DE)
(74) Vertreter: Grünecker Patent- und Rechtsanwälte PartG mbB

(56) Entgegenhaltungen:
- EP-A1- 0 569 674
- WO-A1-96/14257
- WO-A1-2005/051812
- DE-A1- 3 712 939
- DE-U1- 9 104 207
- DE-U1- 9 306 865
- US-A- 1 049 150
- US-A- 3 934 702
- US-A1- 2002 005 646

## Beschreibung

Die vorliegende Erfindung betrifft eine Greifervorrichtung gemäß Anspruch 1, die zur Aufnahme und zum Transport von Produkten, vornehmlich Lebensmittelprodukten geeignet ist.

Die EP 1 986 941 B1 beschreibt eine Handhabungsvorrichtung zum Aufnehmen eines Produkts. Die Vorrichtung umfasst eine Aufnahmeplatte mit einem beweglichen Band, das unter das Produkt gebracht wird, um dieses auf die Aufnahmeplatte zu ziehen.

Aus der EP 2 039 632 A1 ist eine Greifervorrichtung mit einem Niederhalterelement bekannt. Die Greifervorrichtung umfasst einen ersten und einen zweiten Greiferarm, wobei das Niederhalterelement dazwischen angeordnet ist. Während der Aufnahme eines Produkts in der Greifervorrichtung werden die Greiferarme aufeinander zu bewegt, wodurch sich das Niederhalterelement derart faltet, dass die Falten das aufgenommene Produkt gegen die Greiferarme drücken. Wenn sich die Greiferarme zur Abgabe des aufgenommenen Produkts auseinander bewegen, werden die Falten gestreckt, wodurch sich das Niederhalterelement vom Produkt weg bewegt.

Ähnlich wie EP 2 039 632 A1 beschreibt die DE 10 2009 030 012 A1 einen Greifer zur Aufnahme und zum Weitertransport eines Lebensmittelproduktes. Um eine verbesserte Halterung eines aufgenommenen Lebensmittelproduktes im Greifer zu gewährleisten, ist ein Bandgurt vorgesehen, welcher sich beim Schließen der Greiferarme nach unten auswölbt und somit auf das aufgenommene Lebensmittelprodukt drückt. Problematisch kann allerdings sein, dass durch ein wiederholtes mehrmaliges Schließen und Öffnen des Greifers der Bandgurt ausleiert, wodurch das Risiko besteht, dass er das Lebensmittelprodukt im Greifer während eines Transports nicht mehr ausreichend sichern kann. Insbesondere könnte sich dies nachteilig bei Greifern auswirken, die hohen Beschleunigungen ausgesetzt sind.

Die nachveröffentlichte DE 10 2011 109 967 A von der Anmelderin bezieht sich auf eine Greifervorrichtung mit einer Platte zur Aufnahme von Produkten. Auf der Platte ist ein Endlosband angeordnet, welches relativ zur Platte bewegbar ist und dadurch die Aufnahme des Produkts auf die Platte erleichtert.

Eine Greifervorrichtung zur Aufnahme von Produkten ist auch in der nachveröffentlichten DE 10 2010 023 337 A der Anmelderin beschrieben. Die Greifervorrichtung umfasst einen ersten und einen zweiten Greiferarm, die relativ zueinander entlang einer Führung beweglich angeordnet sind. Die Greiferarme umfassen jeweils eine Platte, die zur Aufnahme von Produkten unter dieselben schiebbar ist.

Aus der US 3,934,702 A und DE 91 04 207 U1 sind Greifervorrichtungen bekannt, die Produkte mittels zweier gegenüberliegenden, an den Seiten der Produkte anliegenden elastischen Bändern während einer Umsetzbewegung halten.

EP 0 569 674 A1 und US 2002/005646 A1 offenbaren Greifervorrichtungen für längliche Produkte sowie DE 37 12 939 A1 für Papierstapel.

DE 93 06 865 U1 und WO96/14257 A1 offenbaren die Verwendung von Silikongummibändern fü den Transport von Lebensmitteln.

US 1,049,150 A offenbart eine Greifervorrichtung mit Andrückbändern, die während des Transports eines Produkts dasselbe in der Greifervorrichtung halten können.

Während in der Praxis die Aufnahme von Produkten, insbesondere von Lebensmittelprodukten, meistens problemlos erfolgt, ist es schwierig, das aufgenommene Produkt schnell und sicher zu transportieren. Dabei spielt es eine wichtige Rolle, dass das aufgenommene Produkt zielgenau an einer vorbestimmten Stelle abgelegt wird, um es optimal einem folgenden Arbeitsprozess, beispielsweise einem Verpackungsvorgang, zuzuführen.

Insbesondere kann es sein, dass während eines beschleunigten Versetzens der Greifervorrichtung das Produkt wegen seiner Trägheit in der Greifervorrichtung derart verrückt, dass eine zielgenaue Ablage des Produkts nicht mehr zu erreichen ist. Schlimmstenfalls kann es sein, dass das Produkt während des Transports aus der Greifervorrichtung fällt.

Insbesondere die Beschleunigungen der Greifervorrichtung selbst können dazu führen, dass das Produkt nicht in einer vorbestimmten Position in der Greifervorrichtung bleibt.

Weil man in der Praxis nicht gänzlich ausschließen kann, dass das aufgenommene Produkt von der Greifervorrichtung exakt an der Stelle abgelegt wird, wo man es wünscht, werden zusätzliche Arbeitskräfte benötigt, um die Position des abgelegten Produkts zu kontrollieren und gegebenenfalls zu korrigieren.

Der vorliegenden Erfindung liegt die Aufgabe zugrunde, eine Greifervorrichtung mittels einfacher, konstruktiver technischer Merkmale dahingehend zu verbessern, dass sie eine problemlose Aufnahme von Produkten, einen sicheren Transport sowie eine zielgenaue Abgabe derselben trotz hoher Beschleunigungen der Greifervorrichtung realisieren kann.

Diese Aufgabe wird gelöst mit den technischen Merkmalen des Anspruchs 1. Verbesserte Weiterbildungen der Erfindung sind durch die Unteransprüche gegeben.

Die erfindungsgemäße Greifervorrichtung ist zur Aufnahme und zum Transport von Produkten, insbesondere von Lebensmittelprodukten, geeignet. Die Greifervorrichtung umfasst ein elastisches Band, das an einem Oberflächenabschnitt des zu transportierenden Produkts anliegt, wenn dieses von der Greifervorrichtung aufgenommen ist.

Erfindungsgemäß ist vorgesehen, dass das elastische Band durch mindestens ein Federelement gegen den Oberflächenabschnitt des Produkts andrückbar ist, um das Produkt während des Transports ortsfest in der Greifervorrichtung zu halten.

Wenn das elastische Band gegen das Produkt drückt, wirkt eine Andrückkraft auf das Band und auf das Federelement. Die Andrückkraft versetzt das Federelement in eine Vorspannung, wodurch das Produkt stabil in der Greifervorrichtung gehalten werden kann. Indem das Band durch das Federelement gegen das Produkt gedrückt wird, kann das Produkt selbst bei großen Beschleunigungen der Greifervorrichtung sicher und zielgenau an einen vorbestimmten Ort transportiert werden.

Die Erfindung ermöglicht es auch, zu verhindern, dass sich das Produkt in der Greifervorrichtung verschiebt oder gegebenenfalls aus dieser sogar herausfällt, wenn die Greifervorrichtung beschleunigt wird.

Weil die erfindungsgemäße Greifervorrichtung eine zielgenaue Ablage des transportierten Produkts sicherstellt, kann auf zusätzliches Arbeitspersonal verzichtet werden, das eine Ablageposition des Produkts überprüft. Dies führt zu einer höheren Prozesssicherheit.

Durch das Zusammenwirken des Federelements mit dem elastischen Band kann das Produkt derart sicher in der Greifervorrichtung aufgenommen und transportiert werden, dass selbst bei extremen Beschleunigungen der Greifervorrichtung das Produkt ortsfest in der Greifervorrichtung bleibt. Weil die Greifervorrichtung größeren Beschleunigungen ausgesetzt werden kann, ist eine verbesserte Durchsatzrate von Produkten möglich, wodurch der Ertrag steigt.

In einer weiteren Ausführungsform der Erfindung ist das elastische Band an der Greifervorrichtung lösbar befestigt, insbesondere werkzeug- oder schlüssellos. Dies bietet den Vorteil, dass das elastische Band für Reinigungszwecke von der Greifervorrichtung abgenommen werden kann, um die strengen hygienischen Anforderungen der Lebensmittelindustrie zu erfüllen. Hinzu kommt, dass das lösbare elastische Band problemlos bei einem Produktwechsel ausgetauscht werden kann. Vorzugsweise ist das Band an der Greifervorrichtung lösbar angeknöpft, wodurch eine einfache und schnelle Befestigung durchführbar ist. Dazu kann vorgesehen sein, dass im Band, insbesondere an seinen auslaufenden Enden, lediglich Öffnungen oder Schlitze eingeformt sind, die über Befestigungselemente der Greifervorrichtung derart steckbar sind. Dies bietet eine kostengünstige Lösung, um das Band schnell und einfach an der Greifervorrichtung zu befestigen.

In einer weiteren Ausführungsform der Erfindung ist vorgesehen, dass das elastische Band eine Riffelung auf seiner Oberfläche aufweist. Die Riffelung sorgt für eine besonders gute Griffigkeit zwischen dem Band und dem Produkt und kann verhindern, dass sich das Produkt entlang des elastischen Bandes verschiebt, auch dann, wenn große Beschleunigungen auf die Greifervorrichtung wirken. Dabei kann die Riffelung für unterschiedliche Produkte unterschiedliche Konturen vorsehen.

Vorteilhaft ist es auch, wenn das elastische Band eine Stärke von 1 bis 3 mm, vornehmlich eine Stärke von etwa 2 mm hat. Durch eine solche Bandstärke bleibt das Band stabil, selbst nach einer hohen Anzahl von Arbeitsstunden der Greifervorrichtung. Außerdem kann dadurch eine gewünschte Biegefestigkeit für das Band erreicht werden, damit dieses optimal am Produkt zum Anliegen kommt. Gemäß einer weiteren Verbesserung der Erfindung weist das elastische Band eine Shore-Härte von 60 bis 80 Shore -A oder -D, vorzugsweise 70 Shore -A oder -D, auf. Dadurch kann erreicht werden, dass das elastische Band eine gewünschte Elastizität aufweist. Durch den erwähnten Shore-Härtebereich kann auch sichergestellt werden, dass es das elastische Band vermag, nach einer Verformung selbst zurück in den Ausgangszustand zurückzufedern.

Besonders gut können hygienische Standards dadurch erfüllt werden, wenn das elastische Band ein Silikonband ist. Das Silikonband kann gut gereinigt werden und ist nicht anfällig für eine Ansiedlung von Bakterien oder sonstigen unerwünschten Kulturen. Außerdem nimmt das Silikonband keine Feuchtigkeit und keine Gerüche von Lebensmitteln an, weshalb es problemlos bei unterschiedlichen Lebensmittelprodukten eingesetzt werden kann.

In einer weiteren Ausführungsform der Erfindung ist vorgesehen, dass das elastische Band derart an der Greifervorrichtung befestigt ist, dass es das Federelement vorspannt. Dadurch kann das Band optimal mit dem aufzunehmenden Produkt in Kontakt kommen, an dieses angedrückt werden und dieses in der Greifervorrichtung fixieren. Außerdem kann durch das vorgespannte Federelement das Band derart straff gehalten werden, dass es zu keiner unerwünschten Faltenbildung im elastischen Band kommt. Durch das vorgespannte Federelement und das daran straff gehaltene Band kann des Weiteren eine Geräuschentwicklung während des Transportes, insbesondere wenn die Greifervorrichtung ohne ein aufgenommenes Produkt beschleunigt wird, verringert werden.

Alternativ dazu ist vorgesehen, dass das elastische Band derart an der Greifervorrichtung befestigt ist, dass es vom Federelement durch einen Abstand d beabstandet ist. Gemäß dieser Ausführungsform der Erfindung liegt das Band nicht am Federelement an oder spannt dieses vor. Das Federelement befindet sich also in einem entspannten Zustand.

Dabei ist das Band derart lose an der Greifervorrichtung angeordnet, dass es sich bei der Produktaufnahme zunächst selbst über den Abstand d verformt, bevor es mit dem Federelement in Kontakt kommt und dieses vorspannt. Das Band verformt sich also zunächst gegen den eigens bereitgestellten Verformungswiderstand, der anhand der elastischen Eigenschaft und/oder der Form des Bandes bestimmt ist. Dadurch wird erreicht, dass das aufzunehmende Produkt besonders sanft mit dem Band in Kontakt kommt, weil lediglich die elastische Eigenschaft und/oder die Form des Bandes eine Dämpfung auf das Produkt ausüben, und weil nicht sofort gegen das Federelement gedrückt wird. Dies ist besonders vorteilhaft, um Produkte vorsichtig mit der Greifervorrichtung aufzunehmen, ohne diese zu verformen.

Den hohen hygienischen Anforderungen der Lebensmittelindustrie kommt auch zugute, wenn das Federelement lösbar an der Greifervorrichtung angeordnet ist. Dies kann besonders bei Reinigungsvorgängen hilfreich sein, oder auch dann, wenn das Federelement ausgetauscht werden muss. Es kann auch vorgesehen sein, dass je nach Transportgut unterschiedliche Federelemente zum Einsatz kommen, um eine erwünschte Andrückkraft für das Band sicherzustellen. Dabei könnten bezüglich ihrer Form oder Federrate unterschiedliche Federelemente eingesetzt werden.

Problemlos und stabil lässt sich das Federelement an der Greifervorrichtung befestigen, wenn es ein dafür vorgesehenes Befestigungselement, vornehmlich einen Befestigungsstutzen, aufweist.

Besonders gut kann das elastische Band gegen den Oberflächenabschnitt des Produkts angedrückt werden, wenn das Federelement ein elastischer Faltenbalg ist. Der elastische Faltenbalg kann ziehharmonikaartig zusammengedrückt werden, wenn das Band auf ihn drückt. Wenn das Band nicht mehr auf den Faltenbalg drückt, geht der Faltenbalg in seine ursprüngliche Streckung. Aus hygienischen Gründen kann der Faltenbalg aus Silikon oder einem anderen Kunststoff sein, der leicht zu reinigen ist. Ebenfalls ist der Faltenbalg ein leichtes Federelement, welches sich gut für Beschleunigungen der Greifervorrichtung eignet. Alternativ dazu kann das Federelement anstelle des Faltenbalgs lediglich eine elastische Feder oder ein elastisches Schaumelement sein, um das Band wirksam zu dämpfen.

Vorzugsweise ist das Federelement, vornehmlich der Faltenbalg, als Luftfeder ausgebildet. Die bei Zusammendrücken der Luftfeder verdrängte Luft kann beispielweise durch einen Auslass, der vorzugsweise im Befestigungselement ausgebildet ist, entweichen. Zu diesem Zwecke kann der Faltenbalg hohl ausgebildet sein, wobei die aus ihm verdrängte Luft durch den Auslass strömt, wenn das Band gegen den Faltenbalg drückt. Die dadurch erreichte dämpfende Wirkung kann durch eine Größenänderung des Auslasses variiert werden. Der Auslass kann im Befestigungsstutzen ausgebildet sein, der zur Anordnung des Federelements an der Greifervorrichtung befestigt ist.

Erfindungsgemäß umfasst die Greifervorrichtung eine Schiene, die zur Befestigung des elastischen Bandes vorgesehen ist. Die Schiene bietet eine hervorragende Befestigungsmöglichkeit für das elastische Band und trägt zur allgemeinen Stabilität der Greifervorrichtung bei.

Außerdem ist bei der Erfindung die Schiene zur Befestigung des Federelements vorgesehen, wobei das Federelement derart an der Schiene befestigt ist, dass es zwischen der Schiene und dem elastischen Band angeordnet ist. Wird eine Kraft durch ein aufgenommenes Produkt gegen das elastische Band ausgeübt, drückt dieses gegen das Federelement, welches durch die Schiene gehalten wird. Die Schiene bietet eine stabile Basis, auf der die dämpfende Wirkung des Federelements auf das Band besonders günstig ausgeübt werden kann.

Zur Aufnahme und zum Transport kann die Greifervorrichtung mit mindestens einem ersten Greiferarm ausgestattet sein, der die Aufnahme des Produkts in der Greifervorrichtung erleichtert. Vorzugsweise ist der Greiferarm beweglich ausgebildet, um bei der Aufnahme relativ zum Produkt bewegt zu werden. Der erste Greiferarm kann vorzugsweise mit einem starren oder beweglichen zweiten Greiferarm derart zusammenwirken, dass das Produkt gut aufnehmbar ist und sicher transportiert werden kann.

Die erfindungsgemäße Greifervorrichtung umfasst einen zentralen Bügel, der zur lösbaren Befestigung an einen beweglichen Roboterarm geeignet ist. Dadurch kann die Greifervorrichtung in der Praxis besonders effektiv zum Einsatz kommen.

Vorzugsweise ist vorgesehen, dass die Greifervorrichtung Teil eines Transfersystems ist, welches insbesondere in Verpackungsstraßen in der Lebensmittelindustrie verwendet wird. Dort kann die Greifervorrichtung aufgrund der Möglichkeit großer Beschleunigungen besonders gewinnbringend eingesetzt werden.

Ausführungsformen der Erfindung werden durch die nachfolgenden Figuren erläutert. Dabei zeigen:
- Figur 1: eine Perspektivansicht der erfindungsgemäßen Greifervorrichtung,
- Figur 2: eine Schnittdarstellung der erfindungsgemäßen Greifervorrichtung,
- Figur 3: eine Frontansicht der Greifervorrichtung bei der Aufnahme eines Produkts,
- Figur 4: die erfindungsgemäße Greifervorrichtung mit einem aufgenommenen Produkt während eines Transports,
- Figur 5: eine Schnittdarstellung der Schiene mit dem befestigten Band in der x-z-Ebene gemäß einer ersten Ausführung der Erfindung und
- Figur 6: eine Schnittdarstellung der Schiene mit dem befestigten Band in der x-z-Ebene gemäß einer zweiten Ausführung der Erfindung.

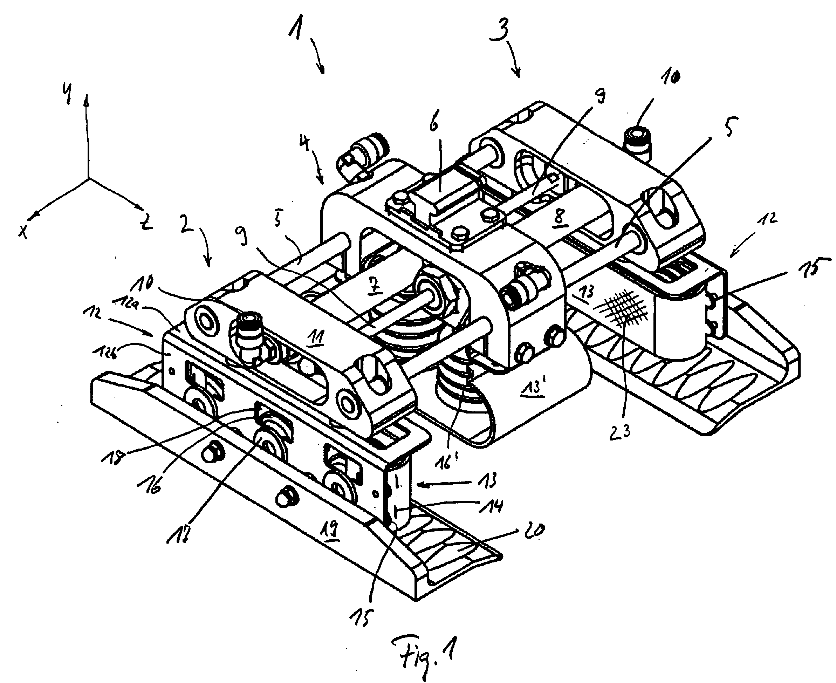

In der Figur 1 ist eine Greifervorrichtung 1 gemäß der Erfindung zur Aufnahme und zum Transport von Produkten gezeigt. Dabei ist die Greifervorrichtung 1 relativ zu einer x-, y-und z-Richtung ausgerichtet. Die Greifervorrichtung 1 umfasst einen ersten und einen zweiten Greiferarm 2, 3 sowie einen Bügel 4, der zwischen den Greiferarmen 2, 3 angeordnet ist. Die beiden Greiferarme 2, 3 sind relativ zum Bügel 4 beweglich angeordnet. Sie können entlang von Führungsstangen 5 bewegt werden, die an dem Bügel 4 befestigt sind und sich in x-Richtung erstrecken.

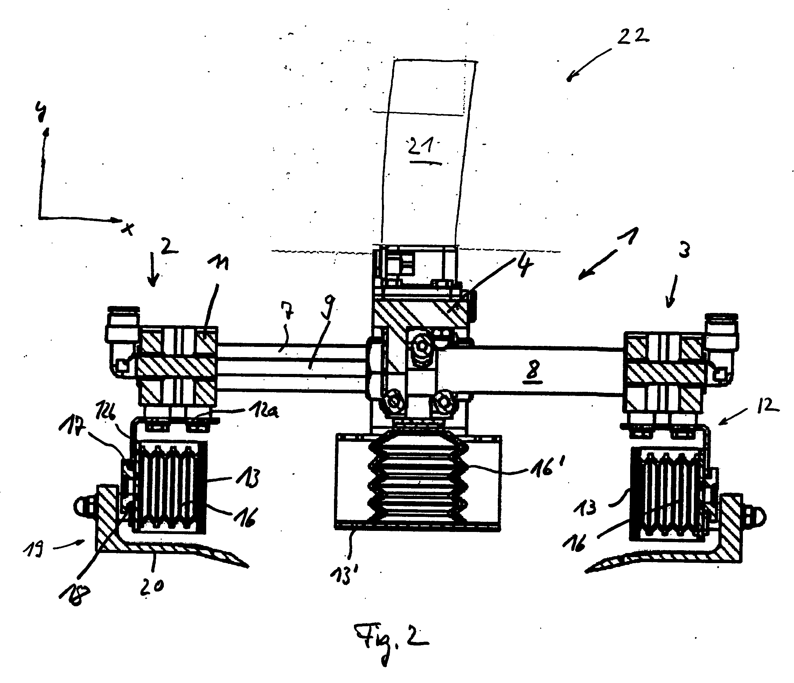

Auf dem Bügel 4 ist eine Halterung 6 vorgesehen, die zur Befestigung der Greifervorrichtung 1 an einem beweglichen Roboterarm 21 dient, der zu einem Transfersystem 22 gehört (siehe Figur 2). Die Halterung 6 ist als T-förmiger Verschluß ausgebildet, kann jedoch von dieser Form abweichen oder auch einen magnetischen Verschluß, vornehmlich mit einem Elektromagneten, umfassen.

Außerdem sind am Bügel 4 eine erste und eine zweite Kolbenzylindereinheit 7, 8 angeordnet, die sich gemäß der Figur 1 zwischen den Führungsstangen 5 in x-Richtung erstrecken. Die erste und die zweite Kolbenzylindereinheit 7, 8 umfassen jeweils einen beweglichen Kolben 9. Der bewegliche Kolben 9 der ersten Kolbenzylindereinheit 7 ist an seinem Ende mit dem zweiten Greiferarm 3 und der bewegliche Kolben 9 der zweiten Kolbenzylindereinheit 8 ist an seinem Ende mit dem ersten Greiferarm 2 verbunden. Die erste und die zweite Kolbenzylindereinheit 7, 8 umfassen jeweils einen Anschluss 10, der beispielsweise zum Anschluss von pneumatischen Schläuchen dient. Die erste und die zweite Kolbenzylindereinheit 7, 8 sind unabhängig voneinander mit einem Druckmittel, vornehmlich Pressluft, ansteuerbar, um den ersten und/oder den zweiten Greiferarm 2, 3 in x-Richtung zu bewegen.

Gemäß der Figur 1 umfassen der erste und der zweite Greiferarm 2, 3 dieselben technischen Merkmale. Deshalb wird im Folgenden dafür lediglich der Aufbau des ersten Greiferarms 2 beschrieben.

Der erste Greiferarm 2 umfasst eine Führungskomponente 11, die entlang der Führungsstangen 5 verschiebbar angeordnet ist. Die Führungskomponente 11 ist vorzugsweise aus einem Kunststoff hergestellt, der gut auf den Führungsstangen 5 gleitbar ist sowie nicht wesentlich zum Gesamtgewicht der Greifervorrichtung 1 beiträgt. Unterhalb der Führungskomponente 11 ist eine Schiene 12 befestigt. Die Schiene 12 ist rechtwinklig ausgebildet und umfasst einen ersten und einen zweiten Schenkel 12a, 12b. Die Schiene 12 kann aus Edelstahl hergestellt sein, ist jedoch darauf nicht beschränkt. Zwischen den beiden Schenkeln 12a, 12b ist ein Band 13 angeordnet. Das Band 13 ist derart am zweiten Schenkel 12b befestigt, dass es im Wesentlichen entlang der Schiene 12, insbesondere entlang des zweiten Schenkels 12b, in z-Richtung verläuft. Insbesondere verläuft ein wesentlicher Abschnitt des Bandes 13 parallel zum zweiten Schenkel 12b der Schiene 12. Das Band 13 umfasst auch eine Riffelung 23, die beispielhaft am Band 13 des zweiten Greiferarms 3 gezeigt wird. Die Riffelung 23 ist in der Figur 1 lediglich abschnittsweise gezeigt. Die Riffelung 23 ist jedoch vorzugsweise auf der gesamten zum Produkt zugewandten Oberfläche des Bandes 13 ausgebildet. Die Riffelung 23 sorgt für eine verbesserte Griffigkeit zwischen dem Band 13 und dem aufzunehmenden Produkt.

Um das Band 13 an der Schiene 12 zu befestigen, sind Öffnungen oder Schlitze 14 im Band 13 vorgesehen. Die Schlitze 14 sind nahe an den auslaufenden Enden des Bandes 13 ausgebildet. Die Schlitze 14 können zur Befestigung des Bandes 13 über an der Schiene 12 vorgesehene Befestigungsvorsprünge 15 geschoben beziehungsweise geknöpft werden, um das Band 13 an der Schiene 12 zu befestigen. Die Befestigungsvorsprünge 15 haben einen pilzförmigen Kopf, der verhindert, dass sich das Band 13 von der Schiene 12 löst. Deutlich zu sehen sind die Befestigungsvorsprünge 15 an der Schiene 12 des zweiten Greiferarms 3.

Zwischen dem Band 13 und der Schiene 12 sind drei Federelemente 16 nebeneinander angeordnet. Die Federelemente 16 sind gemäß der Figur 1 jeweils als Faltenbalg ausgebildet und können durch eine Kraft auf das Band 3 im Wesentlichen in x-Richtung vorgespannt werden.

Die Federelemente 16 umfassen jeweils einen Befestigungsstutzen 17, der zur Befestigung des Federelementes 16 vorgesehen ist. Der Befestigungsstutzen 17 ist in einer Ausnehmung 18 der Schiene 12 befestigt ist. Die Ausnehmung 18 der Schiene 12 ist gemäß der Figur 1 in dem zweiten Schenkel 12b ausgebildet. Der Befestigungsstutzen 17 kann in die Ausnehmung 18 der Schiene 12 derart eingeschoben werden, dass das Federelement 16 sicher an der Schiene 12, insbesondere in x-Richtung, befestigt ist. Das Federelement 16 kann durch ein Aufwärtsschieben in y-Richtung aus der Ausnehmung 18 entfernt werden.

Außerdem zeigt die Figur 1 eine Schaufel 19, die an der Schiene 12 befestigt ist. Die Schaufel 19 umfasst eine Auflagekante 20, die unter das aufzunehmende Produkt greift. Die Auflagekante 20 erstreckt sich unterhalb entlang des Bandes 13 und der Federelemente 16, die zwischen dem Band 13 und der Schiene 12 angeordnet sind.

Unterhalb des Bügels 4 sind Federelemente 16' und ein sich in z-Richtung erstreckendes elastisches Band 13' angeordnet. Eine Befestigung der Federelemente 16' und des elastischen Bandes 13' kann auf ähnliche Art und Weise geschehen, wie es zuvor in Bezug auf den ersten Greiferarm 2 beschrieben wurde. Allerdings können die Federelemente 16' und das elastische Band 13' größer ausgebildet sein, als die Federelemente 16 und das elastische Band 13 des ersten oder zweiten Greiferarms 2, 3. Die Federelemente 16' und das elastische Band 13' werden im Wesentlichen in y-Richtung vorgespannt.

Die Figur 2 zeigt eine Schnittdarstellung der Greifervorrichtung in der x-y-Ebene. Die erste und die zweite Kolbenzylindereinheit 7, 8 halten den ersten und den zweiten Greiferarm 2, 3 relativ zum Bügel 4. Am ersten und zweiten Greiferarm 2, 3 ist das durchtrennte Federelement 16 zu sehen, welches in Wirkrichtung x zwischen dem Band 13 und der Schiene 12, insbesondere dem zweiten Schenkel 12b angeordnet ist. Das Federelement 16 ist mit seinem Befestigungsstutzen 17 durch die Ausnehmung 18 der Schiene 12 geschoben. Gemäß der Figur 2 liegt das Band 13 am Federelement 16 an. Das Federelement 16 kann beispielsweise auch durch das Band 13 vorgespannt sein.

Außerdem zeigt die Figur 2, dass die Auflagekante 20 der Schaufel 19 sich in x-Richtung unterhalb des gespannten Bandes 13 und des Federelements 16 erstreckt.

Der Schnitt der Figur 2 zeigt auch das Federelement 16', welches zwischen dem Band 13' und dem Bügel 4 angeordnet ist. Das Federelement 16', welches als Faltenbalg ausgeführt ist, ist in y-Richtung ausgerichtet und wird durch eine Kraft von unten auf das Band 13' nach oben gegen den Bügel 4 zusammengedrückt. Gemäß der Figur 2 sind die Bänder 13, 13' derart angeordnet, dass die Federelemente 16, 16' vorgespannt sind. Wenn eine Kraft gegen die Bänder 13, 13' wirkt, dann können diese durch Vorspannen der Federelemente 16,16' relativ zur Schiene 12 beziehungsweise zum Bügel 4 bewegt werden.

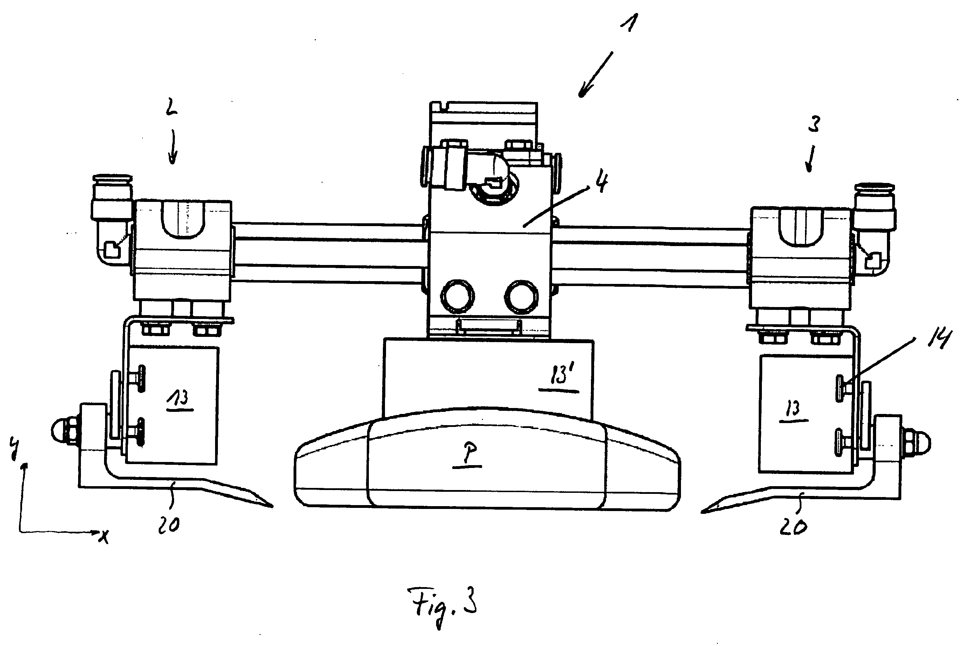

Die Figur 3 zeigt die Greifervorrichtung 1 über einem Produkt P. Das elastische Band 13', welches unter dem Bügel 4 angeordnet ist, liegt auf einem Oberflächenabschnitt des Produkts P auf. Dabei kann sich das Band 13 an den Oberflächenabschnitt des Produkts P anpassen oder bei entsprechender Bandstärke im Wesentlichen horizontal auf das Produkt drücken, wodurch dieses am Oberflächenabschnitt platt gedrückt wird.

Wenn sich der erste und/oder der zweite Greiferarm 2, 3 in x-Richtung zum Bügel 4 hin verschieben, dann schiebt sich die Auflagekante 20 des ersten sowie des zweiten Greiferarms 2, 3 unter das Produkt. Werden die beiden Greiferarme 2, 3 weiter in Richtung Bügel 4 bewegt, dann stößt das Produkt 4 gegen die elastischen Bänder 13 des ersten und des zweiten Greiferarms 2, 3. Folglich kann das Produkt P sowohl in x-, als auch in y-Richtung fixiert werden, wobei das Produkt P in x-Richtung durch die Bänder 13 und in y-Richtung oben durch das Band 13' und unten durch die Auflagekanten 20 fixiert ist.

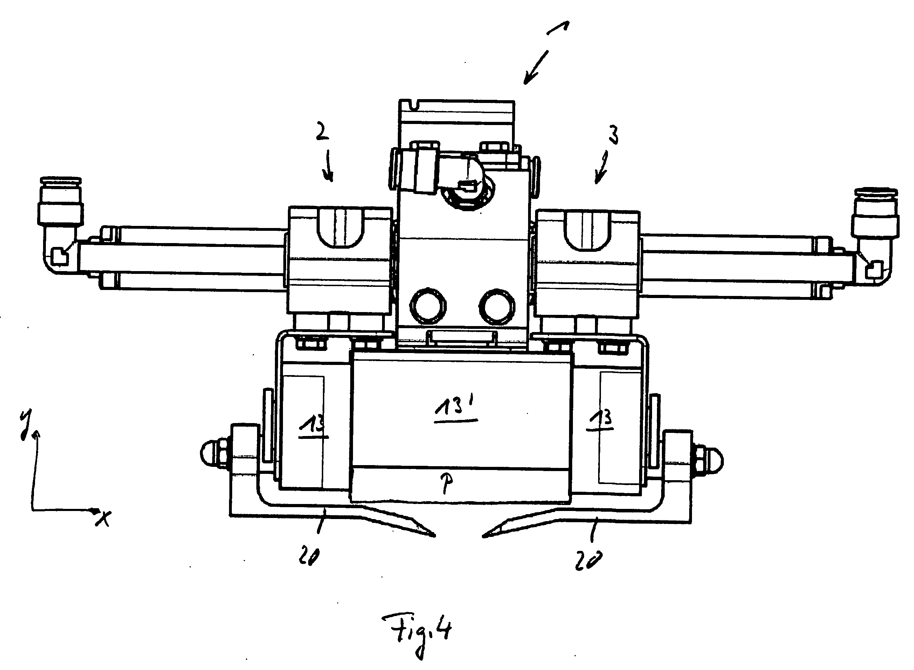

Die Fixierung eines Produkts P (ggf. mit anderen Abmessungen als in Fig. 3) kann man gut in der Figur 4 sehen. Dort ist die Greifervorrichtung 1 mit zusammengefahrenen Greiferarmen 2, 3 abgebildet. Die Greiferarme 2, 3 sind dabei ganz an den Bügel 4 hingefahren. In der Greifervorrichtung 1 wird das Produkt P festgehalten. Das Produkt P liegt auf der Auflagekante 20 des ersten sowie des zweiten Greiferarms 2, 3 auf, während es an seinen Seiten und von oben her durch die elastischen Bänder 13, 13' fixiert ist.

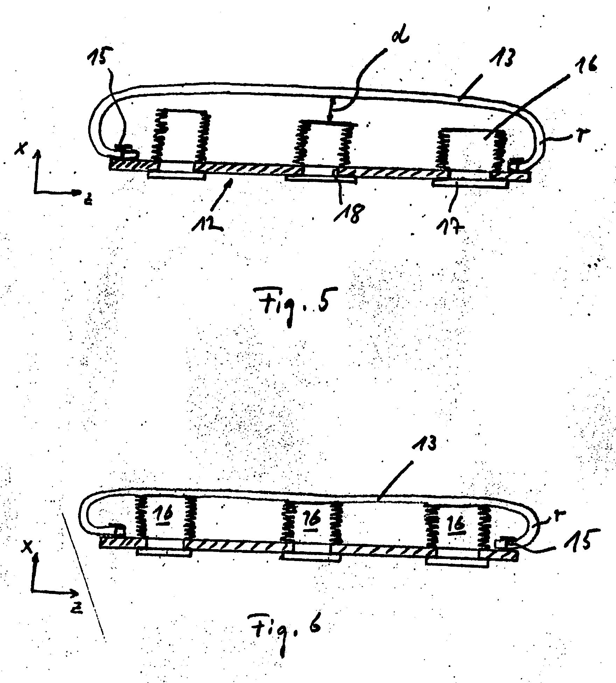

Die Figur 5 zeigt eine Schnittdarstellung der Schiene 12 mit dem befestigten Band 13 in der x-z-Ebene. Das Band 13 ist an seinen auslaufenden Enden jeweils an Befestigungsvorsprüngen 15 befestigt, die von der Schiene 12 abstehen. Drei Federelemente 16 sind an der Schiene 12 bzw. an deren Schenkel 12b in Reihe angeordnet. Der Befestigungsstutzen 17 des jeweiligen Federelementes 16 ist durch die dazugehörige Ausnehmung 18 der Schiene 12 geschoben und in dieser befestigt. Das Band 13 ist derart an der Schiene 12 angeordnet, dass es jeweils an seinen auslaufenden Enden einen Radius r formt, sodass ein wesentlicher Abschnitt des Bandes 13 im Wesentlichen parallel zur Schiene 12 verläuft. Außerdem zeigt die Figur 5, dass das Band von den drei Federelementen 16 beabstandet ist. Der Abstand zwischen dem Band 13 und den jeweiligen Federelementen 16 kann gleich oder verschieden groß sein. Insbesondere ist das Band 13 vom mittigen Federelement 16 durch einen Abstand d beabstandet.

Die Figur 6 zeigt eine alternative Bandfixierung an der Schiene 12 zur Ausführung gemäß Figur 5. Dabei ist das Band 13 ebenfalls an seinen auslaufenden Enden an den jeweiligen Befestigungsvorsprüngen 15 gehalten. Allerdings liegt das Band 13 gemäß der Figur 6 an den drei Federelementen 16 an oder spannt diese gemäß einer weiteren Ausführung sogar vor. Das Band 13 ist hier also nicht von den Federelementen 16 beabstandet. Dadurch, dass das Band 13 die Federelemente 16 kontaktiert, ist der Radius r kleiner als der von der Figur 5 gezeigte.

Die Bandfixierung gemäß der Figur 5 oder der Figur 6 kann sowohl bei dem ersten und/oder dem zweiten Greiferarm 2, 3, als auch bei der Fixierung des Bandes 13' am Bügel 4 verwendet werden.

Der Einsatz der erfindungsgemäßen Greifervorrichtung 1 kann in unterschiedlichen industriellen Bereichen erfolgen. Dabei kann es sich um den Transfer unterschiedlicher Produkte handeln.

## Patentansprüche

1. Greifervorrichtung (1) zur Aufnahme und zum Transport eines Produkts (P), umfassend einen ersten und einen zweiten Greiferarm (2, 3);
einen Bügel (4), der an einem Roboterarm (21) befestigbar ist, wobei der Bügel (4) zwischen dem ersten und dem zweiten Greiferarm (2, 3) angeordnet ist,
wobei der erste Greiferarm (2), der zweite Greiferarm (3) und der Bügel (4) jeweils ein elastisches Band (13), das an einem Oberflächenabschnitt des Produkts (P) anliegt, wenn dieses von der Greifervorrichtung (1) aufgenommen ist, und mindestens ein Federelement (16) umfassen;
wobei das jeweilige elastischen Band (13) des ersten Greiferarms (2), des zweiten Greiferarms (3) und des Bügels (4) durch das jeweilige Federelement (16) gegen den Oberflächenabschnitt des Produkts (P) andrückbar ist, um das Produkt (P) während des Transports ortsfest in der Greifervorrichtung (1) zu halten, und wobei das Produkt (P) in einer ersten Richtung durch die elastischen Bänder (13) des ersten und zweiten Greiferarms (2, 3) und in einer zweiten Richtung, die orthogonal zur ersten Richtung ist, durch das elastische Band 13 des Bügels (4) gehalten ist.

2. Greifervorrichtung nach Anspruch 1, **dadurch gekennzeichnet, dass** das elastische Band (13) an der Greifervorrichtung (1) lösbar befestigt ist.

3. Greifervorrichtung nach einem der vorigen Ansprüche, **dadurch gekennzeichnet, dass** das elastische Band (13) eine Riffelung (23) auf seiner Oberfläche aufweist.

4. Greifervorrichtung nach einem der vorigen Ansprüche, **dadurch gekennzeichnet, dass** das elastische Band (13) eine Stärke von 1 bis 3 mm, vornehmlich 2 mm hat.

5. Greifervorrichtung nach einem der vorigen Ansprüche, **dadurch gekennzeichnet, dass** das elastische Band (13) ein Silikonband ist.

6. Greifervorrichtung nach einem der vorigen Ansprüche, **dadurch gekennzeichnet, dass** das elastische Band (13) derart an der Greifervorrichtung (1) befestigt ist, dass es das Federelement (16) vorspannt.

7. Greifervorrichtung nach einem der Ansprüche 1 bis 5, **dadurch gekennzeichnet, dass** das elastische Band (13) derart an der Greifervorrichtung (1) befestigt ist, dass es vom Federelement (16) durch einen Abstand d beabstandet ist.

8. Greifervorrichtung nach einem der vorigen Ansprüche, **dadurch gekennzeichnet, dass** das Federelement (16) lösbar an der Greifervorrichtung (1) angeordnet ist.

9. Greifervorrichtung nach einem der vorigen Ansprüche, **dadurch gekennzeichnet, dass** das Federelement (16) ein Befestigungselement, vornehmlich einen Befestigungsstutzen (17) aufweist.

10. Greifervorrichtung nach einem der vorigen Ansprüche, **dadurch gekennzeichnet, dass** das Federelement (16) ein elastischer Faltenbalg ist.

11. Greifervorrichtung nach einem der vorigen Ansprüche, **dadurch gekennzeichnet, dass** das Federelement (16) als Luftfeder ausgebildet ist.

12. Greifervorrichtung nach einem der vorigen Ansprüche, **dadurch gekennzeichnet, dass** der erste und zweite Greiferarm (2, 3) eine Schiene (12) zur Befestigung des elastischen Bands (13) umfassen.

13. Greifervorrichtung nach Anspruch 12, **dadurch gekennzeichnet, dass** das Federelement (16) derart an der Schiene (12) befestigt ist, dass es zwischen der Schiene (12) und dem elastischen Band (13) angeordnet ist.

14. Transfersystem (22) zur Aufnahme und zum Transport von Produkten (P), umfassend eine Greifervorrichtung (1) gemäß einem der vorigen Ansprüche.

## Claims

1. A gripping device (1) for picking up and transporting a product (P), comprising a first and a second gripper arm (2, 3);
a central clamp (4), which can be mounted onto a robot arm (21), wherein the clamp (4) is arranged between the first and second gripper arms (2, 3),
wherein the first gripper arm (2), the second gripper arm (3) and the clamp (4) each comprise an elastic belt (13), which lies against a surface section of the product (P) when the product (P) is picked up by the gripping device; and
at least one spring element (16);
wherein the corresponding elastic belt (13) of the first gripper arm (2), the second gripper arm (3), and the clamp (4) can be pressed against the surface section of the product by the corresponding spring element (16), in order to hold the product (P) in the gripping device (1) in a stationary manner during the transport, and wherein the product (P) is held in a first direction by the elastic belts (13) of the first and the second gripper arms (2, 3) and in a second direction, that is orthogonal to the first direction, by the elastic belt (13) of the clamp (4).

2. Gripping device according to Claim 1 **characterised in that** the elastic belt (13) is attached to the gripping device (1) in a detachable manner.

3. Gripping device according to one of the previous claims **characterised in that** the elastic belt (13) has a ribbing (23) on its surface.

4. Gripping device according to one of the previous claims **characterised in that** the elastic belt (13) has a thickness of from 1 to 3 mm, principally 2 mm.

5. Gripping device according to one of the previous claims **characterised in that** the elastic belt (13) is a silicone belt.

6. Gripping device according to one of the previous claims **characterised in that** the elastic belt (13) is attached to the gripping device (1) in such a manner that it pretensions the spring element (16).

7. Gripping device according to one of the Claims 1 to 5 **characterised in that** the elastic belt (13) is attached to the gripping device (1) in such a manner that said elastic belt is spaced at a distance d from the spring element (16).

8. Gripping device according to one of the previous claims **characterised in that** the spring element (16) is arranged on the gripping device (1) in a detachable manner.

9. Gripping device according to one of the previous claims **characterised in that** the spring element (16) has an attachment element, principally an attachment lug (17).

10. Gripping device according to one of the previous claims **characterised in that** the spring element (16) is an elastic expansion bellows.

11. Gripping device according to one of the previous claims **characterised in that** the spring element (16) is formed as a pneumatic spring.

12. Gripping device according to one of the previous claims **characterised in that** the first and the second gripper arm (2, 3) comprise a rail (12) for the attachment of the elastic belt (13).

13. Gripping device according to Claim 12 **characterised in that** the spring element (16) is attached to the rail (12) in such a manner that said spring element is arranged between the rail (12) and the elastic belt (13).

14. Transfer system (22) for picking up and transporting products (P), comprising a gripping device (1) according to one of the previous claims.

## Revendications

1. Dispositif préhenseur (1) destiné à saisir et à transporter un produit (P) et comprenant un premier et un deuxième bras préhenseur (2, 3), un étrier (4) qui peut être fixé sur un bras de robot (21), l'étrier (4) étant agencé entre le premier et le deuxième bras préhenseur (2, 3), dispositif
dans lequel le premier bras préhenseur (2), le deuxième bras préhenseur (3) et l'étrier (4) comportent chacun respectivement une bande élastique (13), qui s'applique contre un secteur de surface du produit (P) lorsque celui-ci est saisi par le dispositif préhenseur (1), et au moins un élément de ressort (16),
dans lequel la bande élastique (13) respective du premier bras préhenseur (2), du deuxième bras préhenseur (3) et de l'étrier (4) peut être pressée par l'élément de ressort (16) respectivement correspondant, contre le secteur de surface du produit (P), en vue de maintenir le produit (P) en position fixe dans le dispositif préhenseur (1) pendant le transport,
et dans lequel le produit (P) est maintenu dans une première direction par les bandes élastique (13) du premier et du deuxième bras préhenseur (2, 3), et dans une deuxième direction, qui est orthogonale à la première direction, par la bande élastique (13) de l'étrier (4).

2. Dispositif préhenseur selon la revendication 1, **caractérisé en ce que** la bande élastique (13) est fixée de manière amovible au dispositif préhenseur (1).

3. Dispositif préhenseur selon l'une des revendications précédentes, **caractérisé en ce que** la bande élastique (13) présente un rainurage (23) sur sa surface.

4. Dispositif préhenseur selon l'une des revendications précédentes, **caractérisé en ce que** la bande élastique (13) présente une épaisseur de 1 à 3 mm, de préférence de 2 mm.

5. Dispositif préhenseur selon l'une des revendications précédentes, **caractérisé en ce que** la bande élastique (13) est une bande en silicone.

6. Dispositif préhenseur selon l'une des revendications précédentes, **caractérisé en ce que** la bande élastique (13) est fixée au dispositif préhenseur (1) de manière à produire une précontrainte de l'élément de ressort (16).

7. Dispositif préhenseur selon l'une des revendications 1 à 5, **caractérisé en ce que** la bande élastique (13) est fixée au dispositif préhenseur (1) de manière à être espacée d'une distance d de l'élément de ressort (16).

8. Dispositif préhenseur selon l'une des revendications précédentes, **caractérisé en ce que** l'élément de ressort (16) est agencé de manière amovible sur le dispositif préhenseur (1).

9. Dispositif préhenseur selon l'une des revendications précédentes, **caractérisé en ce que** l'élément de ressort (16) comporte un élément de fixation, de préférence un embout de fixation (17).

10. Dispositif préhenseur selon l'une des revendications précédentes, **caractérisé en ce que** l'élément de ressort (16) est un soufflet élastique.

11. Dispositif préhenseur selon l'une des revendications précédentes, **caractérisé en ce que** l'élément de ressort (16) est réalisé sous la forme de ressort à air.

12. Dispositif préhenseur selon l'une des revendications précédentes, **caractérisé en ce que** le premier et le deuxième bras préhenseur (2, 3) comportent un rail (12) pour la fixation de la bande élastique (13).

13. Dispositif préhenseur selon la revendication 12, **caractérisé en ce que** l'élément de ressort (16) est fixé au rail (12) de manière à être agencé entre le rail (12) et la bande élastique (13).

14. Système de transfert (22) destiné à saisir et transporter des produits (P), et comprenant un dispositif préhenseur (1) selon l'une des revendications précédentes.
